# EUROPÄISCHE PATENTSCHRIFT

(11) **EP 3 052 904 B1**
(45) Veröffentlichungstag und Bekanntmachung des Hinweises auf die Patenterteilung: **08.11.2017**
(21) Anmeldenummer: 14771585.8
(22) Anmeldetag: 23.09.2014
(51) Int. Cl.: G01F 1/66, G01F 15/00, G01K 17/10

(54) **MESSEINSATZ FÜR EINEN ULTRASCHALL-DURCHFLUSSMESSER UND VERFAHREN ZU DESSEN HERSTELLUNG**
MEASURING INSERT FOR AN ULTRASONIC FLOWMETER AND METHOD FOR ITS MANUFACTURING
INSERT DE MESURE POUR UN DÉBITMÈTRE À ULTRASONS ET PROCÉDÉ DE SA FABRICATION

(30) Priorität: 01.10.2013 DE 102013219907
(43) Veröffentlichungstag der Anmeldung: 10.08.2016
(73) Patentinhaber: Landis+Gyr GmbH, 90459 Nürnberg (DE)
(72) Erfinder: HEROLD, Peter, 90459 Nürnberg (DE)
(74) Vertreter: Rau, Schneck & Hübner Patentanwälte Rechtsanwälte PartGmbB
(86) Internationale Anmeldenummer: PCT/EP2014/070182
(87) Internationale Veröffentlichungsnummer: WO 2015/049122

(56) Entgegenhaltungen:
- EP-A1- 0 392 294
- EP-A1- 0 559 938
- EP-A1- 1 798 528
- EP-A1- 1 978 337
- EP-A1- 2 270 439
- EP-A1- 2 278 281

## Beschreibung

Die Erfindung betrifft einen Messeinsatz für einen Durchflussmesser zur schallbasierten Erfassung einer Durchflussmenge eines flüssigen oder gasförmigen Mediums. Außerdem betrifft die Erfindung ein Verfahren zur Herstellung eines solchen Messeinsatzes.

Derartige Durchflussmesser auf Grundlage der (Ultra-)Schallmesstechnik sind bekannt. Impulsförmige (Ultra-)Schallsignale werden mittels (Ultra-) Schallwandler erzeugt sowie in Flussrichtung und entgegen der Flussrichtung durch das Medium gesendet, wobei meistens zur Umlenkung der Schallsignale mindestens ein Umlenkspiegel in Form eines Schallreflektors vorgesehen ist. Der Unterschied der Laufzeiten der Schallsignale in beiden Laufrichtungen wird zur Ermittlung der Durchflussmenge des Mediums ausgewertet. Solche (ultra-)schallbasierten Durchflussmesser haben bidirektionale Schallwege und arbeiten nach dem Laufzeitdifferenzprinzip.

Es gibt verschiedene Ausgestaltungen. Zum einen sind Einrichtungen bekannt, die Durchflussmesser im eigentlichen Sinne darstellen und ausschließlich die Durchflussmenge des Mediums ermitteln. Zum anderen gibt es auch Energiezähler, beispielsweise in Form von Wärme- und Kältezählern, bei denen die nach dem vorstehend erläuterten Prinzip ermittelte Durchflussmenge mit einer zusätzlich über ein Temperaturfühlerpaar ermittelten Temperaturdifferenz im Vor- und Rücklauf in Verbindung gebracht wird, um so die über das Medium zugeführte (Wärme- oder Kälte-) Energie zu bestimmen. Auch derartige Energiezähler sind hier als - speziell ausgestaltete - Durchflussmesser zu verstehen.

Bekannt sind Ausgestaltungen von Ultraschall-Durchflussmessern, die einen austauschbaren Messeinsatz aufweisen. So wird in der EP 0 890 826 B1 ein austauschbarer wannenförmiger Messeinsatz aus Kunststoff mit in spezielle Taschen eingebrachten Reflexionsscheiben beschrieben. Weiterhin wird in der EP 0 477 418 A1 ein Durchflussmesser mit einem Messeinsatz in Form einer wannenartigen Blechkonstruktion beschrieben. Auch der in der EP 2 006 646 A1 offenbarte Ultraschalldurchflussmesser hat einen austauschbaren Messeinsatz, bei dem die Schallwandler auf einander gegenüberliegenden Seiten der Messstrecke angeordnet sind.

In der EP 1 978 337 A1 wird ein weiterer Ultraschall-Durchflussmesser beschrieben, dessen rohrförmige Messstrecke mittels zweier zweigeteilter Reflektorhalter oder mittels eines einteiligen Reflektorhalters innerhalb des Gehäuses gehalten wird. In die Reflektorhalter ist jeweils ein Schallreflektor eingesetzt. Es resultiert ein relativ komplizierter Aufbau mit vielen Einzelkomponenten.

Obwohl z.B. aus EP 1 693 652 A2, EP 2 270 439 A1, EP 2 278 281 A1, EP 1 995 570 A1, EP 1 798 528 A1, EP 2 725 327 A1, DE 199 44 411 A1, DE 201 07 894 U1, DE 197 13 526 A1, DE 10 2012 205 683 A1, US 2014 0123768 A1, DE 10 2012 111 757 A1, DE 10 2008 038 163 A1 bereits zahlreiche (ultra-)schallbasierte Durchflussmesser und zum Teil auch deren Herstellungsverfahren bekannt sind, besteht weiterhin Bedarf an verbesserten Lösungen beispielsweise im Hinblick auf eine möglichst kostengünstige Herstellung derartiger Geräte.

In der EP 0 392 294 A1 ist ein weiterer ultraschallbasierter Durchflussmesser beschrieben, der einen Messeinsatz umfasst, an dessen Innenwand an verschiedenen Stellen Reflektoren angebracht sind. Ein ähnlicher weiterer ultraschallbasierter Durchflussmesser ist auch in der EP 0 559 938 A1 beschrieben.

Eine Aufgabe der Erfindung besteht darin, einen Messeinsatz der eingangs bezeichneten Art anzugeben, der gegenüber den bekannten Messeinsätzen von Durchflussmessern verbessert ist.

Zur Lösung dieser Aufgabe wird ein Messeinsatz entsprechend den Merkmalen des Patentanspruchs 1 angegeben. Der erfindungsgemäße Messeinsatz für einen Durchflussmesser zur schallbasierten Erfassung einer Durchflussmenge eines flüssigen oder gasförmigen Mediums umfasst einen Hauptabschnitt mit einem hohlen Durchflussteil und einem damit einstückig verbundenen Basisteil, wobei das Durchflussteil und das Basisteil sich über eine gemeinsame Hauptabschnittslänge in eine Längsrichtung erstrecken, wobei die Längsrichtung gleich einer Durchflussrichtung des den Messeinsatz während des Betriebs durchströmenden Mediums ist, das Durchflussteil auf dem Basisteil sitzt, das Basisteil ein sich in Längsrichtung über die Hauptabschnittslänge erstreckendes Reflexionselement aus Metall oder aus Keramik umfasst, wobei das Reflexionselement im Hauptabschnitt senkrecht zur Längsrichtung überall umhüllt ist, nämlich in ein anderes Material, beispielsweise in ein Kunststoffmaterial, eingebettet ist. Außerdem umfasst der erfindungsgemäße Messeinsatz mindestens einen Randabschnitt, der auf einer ersten axialen Stirnseite des Hauptabschnitts einstückig mit dem Hauptabschnitt verbunden ist, wobei sich das Reflexionselement ausgehend vom Hauptabschnitt bis in den Randabschnitt erstreckt, und das Reflexionselement im Randabschnitt einen Schallreflektor für ein Schallsignal bildet.

Es wurde erkannt, dass sich ein Messeinsatz für einen schallbasierten Durchflussmesser besonders einfach und effizient herstellen lässt, wenn ein insbesondere aus einem anderen Material als der übrige Messeinsatz bestehendes Reflexionselement nicht nur lokal eng begrenzt am Ort des Schall reflektors vorhanden ist, sondern auch an anderen Stellen. Es kann dann an diesen anderen Stellen bei Bedarf ebenfalls zur Schallreflektion herangezogen werden, ohne dass dafür eine aufwändige Umkonstruktion des Messeinsatzes erforderlich würde. So ist es insbesondere möglich, dass das Reflexionselement sowohl eingangsseitig als auch ausgangsseitig der eigentlichen Messstrecke, welche insbesondere durch das hohle Durchflussteil des Hauptabschnitts gebildet ist, jeweils einen Schallreflektor bildet. Obwohl dann also zwei Reflektionsstellen vorhanden sind, kommt dafür insbesondere nur eine einzige Komponente in Form des Reflexionselements zum Einsatz. Dadurch sinkt die Zahl der benötigten Einzelkomponenten, was sich günstig auf den Fertigungsaufwand auswirkt.

Der erfindungsgemäße Messeinsatz kann austauschbar ausgestaltet sein. Dies ist aber keine zwingende Vorgabe. Ebenso ist eine nicht austauschbare Ausführungsform möglich.

Das Durchflussteil und das Basisteil sind einstückig miteinander verbunden. Dann resultiert ein besonders guter Zusammenhalt zwischen beiden Teilen. Vorzugsweise kann die Verbindung zwischen dem Durchflussteil und dem Basisteil bereits während des Herstellungsvorgangs beider Teile erfolgen. Bevorzugt werden beide Teile während eines gemeinsamen Prozesses, wie z.B. eines Spritzgussprozesses oder eines Strangpressprozesses, als von Anfang an unmittelbar miteinander verbundene Bereiche eines einheitlichen Messeinsatz-Gebildes hergestellt.

Das Durchflussteil und das Basisteil haben eine gemeinsame oder gleiche Hauptabschnittslänge. Sie sind also gleich lang. Die Längsrichtung ist insbesondere zugleich auch die Durchflussrichtung, in der das Medium, dessen Durchflussmenge erfasst werden soll, während des Betriebs durch den Messeinsatz hindurch strömt. Eine Richtung in oder parallel zur Längsrichtung oder Durchflussrichtung wird hier auch als "axial" und eine zur Längsrichtung oder Durchflussrichtung senkrechte Richtung wird hier auch als "radial" bezeichnet.

Aufgrund der Einbettung des Reflexionselements in ein anderes Material, beispielsweise in ein Kunststoffmaterial, ist das Reflexionselement vor Umgebungseinflüssen und bevorzugt auch vor dem unter Umständen aggressiven Einfluss des zu erfassenden Mediums geschützt. Das Reflexionselement kann insbesondere innerhalb eines den Hohlraum des Durchflussteils begrenzenden und das Basisteil zumindest teilweise mit umfassenden Wandabschnitts angeordnet sein, insbesondere in einer senkrecht zur Durchflussrichtung orientierten Dickenrichtung dieses Wandabschnitts betrachtet an verschiedenen Positionen.

Das Reflexionselement ist aus einem Metall oder einer Keramik hergestellt. Insbesondere ist das Reflexionselement als ein Metallband, insbesondere als ein Stahlband, ausgeführt. Metalle reflektieren Schall sehr gut. Gleiches gilt auch für Keramiken.

Vorteilhafte Ausgestaltungen des erfindungsgemäßen Messeinsatzes ergeben sich aus den Merkmalen der von Anspruch 1 abhängigen Ansprüche.

Gemäß einer günstigen Ausgestaltung ist das Reflexionselement im Randabschnitt zumindest bereichsweise frei zugänglich und bildet in eimen frei zugänglichen Bereich den Schallreflektor. Aufgrund der Freilegung des Reflexionselements ergibt sich ein besonders gutes und definiertes Schallreflexionsverhalten. Jenseits des oder der frei zugänglichen Bereichs bzw. Bereiche ist das Reflexionelement insbesondere mit dem anderen Material, z.B. mit einem Kunststoffmaterial, bedeckt, so dass das Reflexionselement dort geschützt ist. Bei einer anderen grundsätzlich ebenfalls möglichen alternativen Ausgestaltung ist keine Freilegung des Reflexionselements vorgesehen. Stattdessen ist bei dieser alternativen Ausgestaltung der Schallreflektor durch einen mit dem anderen Material, z.B. einem Kunststoffmaterial, bedeckten Bereich des Reflexionselements gebildet. Das das Reflexionselement bedeckende Material ist insbesondere schalldurchlässig, so dass ein Schallsignal während des Betriebs dieser alternativen Ausgestaltung das das Reflexionselement bedeckende Material durchdringt und erst an der Oberfläche des Reflexionselements reflektiert wird. Diese alternative Ausgestaltung ist ebenfalls sehr vorteilhaft, da auch im Bereich des eigentlichen Schallreflektors aufgrund der Bedeckung mit einem anderen Material ein sehr guter Schutz vor fremden Einflüssen gegeben ist. Dies ist deshalb so günstig, da der Bereich des Schallreflektors der wesentliche Funktionsbereich ist und möglichst dauerhaft sein ursprünglich konzipiertes (Reflexions-)Verhalten beibehalten sollte.

Gemäß einer weiteren günstigen Ausgestaltung verläuft das Reflexionselement im Randabschnitt unter einer gegenüber der Längsrichtung abgewinkelten Randrichtung. Im Randabschnitt verläuft das Reflexionselement also insbesondere unter einem von Null verschiedenen Randwinkel gegenüber der Längsrichtung. Das Reflexionselement hat in einem Übergangsbereich zwischen dem Hauptabschnitt und dem Randabschnitt insbesondere einen Knick oder eine Biegestelle (= Umbiegung). Dadurch lässt sich ein Schallsignal sehr einfach und zugleich sehr effizient in den die eigentliche Messtrecke bildenden Hohlraum des Durchflussteils einkoppeln und/oder ein von dort ankommendes Schallsignal auch genauso einfach und effizient wieder auskoppeln. Grundsätzlich ist auch eine alternative Ausgestaltung ohne Abwinkelung des Reflexionselements im Randabschnitt möglich. Bei dieser alternativen Ausgestaltung wird der Schallreflektor des Messeinsatzes vorzugsweise schräg beschallt, wobei außerdem insbesondere auch ein weiteres Reflexionselement innerhalb des Hauptabschnitts vorgesehen sein kann.

Gemäß einer weiteren günstigen Ausgestaltung ist ein Stützelement, insbesondere in Form eines Stützkeils, vorgesehen, der das Reflexionselement im Randabschnitt in seiner abgewinkelten Position mit dem Verlauf in der Randrichtung hält. Dadurch wird erreicht, dass der im Randabschnitt vorgesehene Schallreflektor dauerhaft in der anfänglich im Zuge des Herstellungsprozesses eingestellten kalibrierten Position bleibt. Auf diese Weise wird die Gefahr einer im Laufe des Betriebs ansonsten möglicherweise eintretenden Verschlechterung der Messergebnisse zumindest erheblich vermindert.

Gemäß einer weiteren günstigen Ausgestaltung ist das Stützelement fest mit dem Reflexionselement verbunden, insbesondere an einer sich in den Randabschnitt erstreckenden Verlängerung des Basisteils. Dadurch wird während des Betriebs eine versehentliche und unerwünschte Änderung der Position des Stützelements und damit möglicherweise auch des Schallreflektors verhindert. Vorzugsweise ist das Stützelement an das Reflexionselement angespritzt, angegossen oder angeklebt. So resultiert eine sichere feste Verbindung. Bevorzugt besteht das Stützelement aus dem gleichen Material wie das Durchflussteil oder wie die im Basisteil insbesondere vorgesehene Umhüllung des Reflexionselements. Dadurch vereinfacht sich die Herstellung einer stabilen festen Verbindung zwischen der Verlängerung des Basisteils und dem Stützelement. Grundsätzlich kann das Stützelement bei einer alternativen Ausgestaltung aber auch aus einem anderen Material als das Durchflussteil oder die im Basisteil insbesondere vorgesehene Umhüllung des Reflexionselements bestehen.

Gemäß einer weiteren günstigen Ausgestaltung ist das Durchflussteil aus oder mit einem Kunststoffmaterial hergestellt. Das Gleiche gilt für das Basisteil, jedenfalls abgesehen von dem aus Metall oder Keramik bestehenden Reflexionselement. So lässt sich der Messeinsatz sehr kostengünstig herstellen. Außerdem hat er dann ein sehr leichtes Gewicht. Als Kunststoffmaterial kann bevorzugt ein Thermoplast, wie z.B. PPA (= Polyphthalamide), vorgesehen sein. Damit wird insbesondere eine hohe Dimensionsstabilität des Messeinsatzes erreicht. PPA hat außerdem nur eine geringe Feuchtigkeitsaufnahme, was vorteilhaft ist, wenn es sich bei dem zu erfassenden Medium um Wasser oder eine andere ähnliche Flüssigkeit handelt.

Gemäß einer weiteren günstigen Ausgestaltung ist ein weiterer Randabschnitt vorgesehen, der auf einer zweiten axialen Stirnseite des Hauptabschnitts einstückig an den Hauptabschnitt angeformt ist, wobei sich das Reflexionselement ausgehend vom Hauptabschnitt bis in den weiteren Randabschnitt erstreckt, und das Reflexionselement im weiteren Randabschnitt einen weiteren Schallreflektor für ein Schallsignal bildet. Ein einziges Reflexionselement bildet dann vorteilhafterweise die beiden Schallreflektoren. Insbesondere ist der weitere Schallreflektor analog zum ersten Schallreflektor aufgebaut. Mit dieser Ausgestaltung kann ein Schallsignal sehr gut in die eigentliche Messtrecke eingekoppelt und aus der Messtrecke ausgekoppelt werden. Außerdem lässt sich so sehr gut ein nach dem Laufzeitdifferenzprinzip arbeitender Durchflussmesser mit bidirektionalen Schallwegen realisieren.

Gemäß einer weiteren günstigen Ausgestaltung hat das Durchflussteil die Form eines Hohlzylinders. Diese Gestalt bietet strömungstechnische Vorteile. Es gibt keine schlechter oder nicht durchströmbaren Rand- oder Eckzonen.

Gemäß einer weiteren günstigen Ausgestaltung ist zumindest der Hauptabschnitt als ein Strangpressprofil oder als ein Extrusionsprofil mit in das Basisteil eingelagertem Reflexionselement ausgestaltet. Derartige Profile sind Massenwaren und lassen sich sehr kostengünstig herstellen.

Gegenstand der Erfindung ist auch ein Durchflussmesser zur schallbasierten Erfassung einer Durchflussmenge eines flüssigen oder gasförmigen Mediums, der neben mindestens einem Schallwandler, vorzugsweise zwei Schallwandlern, und einem Gehäuse auch einen in das Gehäuse eingesetzten Messeinsatz gemäß der Erfindung oder gemäß einer der hier beschriebenen vorteilhaften Ausgestaltungen des Messeinsatzes umfasst, wobei der mindestens eine Schallwandler ausgebildet ist zum Senden eines Schallsignals mittels des Schallreflektors in das und/oder zum Empfangen eines Schallsignals mittels des Schallreflektors aus dem während des Betriebs von dem Medium durchströmten und eine Messstrecke bildenden Durchflussteil.

Eine weitere Aufgabe der Erfindung besteht darin, ein Herstellungsverfahren der eingangs bezeichneten Art anzugeben, mittels dessen sich ein Messeinsatz verglichen mit den bekannten Herstellungsverfahren besser herstellen lässt.

Zur Lösung dieser Aufgabe wird ein Verfahren entsprechend den Merkmalen des Patentanspruchs 10 angegeben. Bei dem erfindungsgemäßen Verfahren zur Herstellung eines Messeinsatzes ist es vorgesehen, dass ein Strangpressprofil oder ein Extrusionsprofil mit einem Durchflussstrangteil und einem damit verbundenen Basisstrangteil hergestellt wird, wobei während der Herstellung des Strangpressprofils ein Reflexionselementstrang in das Basisstrangteil mit eingebettet wird, von dem Strangpressprofil ein Messeinsatzrohling abgeschnitten wird, und an mindestens einem axialen Randabschnitt des Messeinsatzrohlings das Durchflussstrangteil entfernt wird.

Die Verwendung eines Strangpress- oder Extrusionsprofils ermöglicht eine sehr preiswerte Fertigung des Messeinsatzes. Ansonsten bieten das erfindungsgemäße Verfahren und seine Ausgestaltungen die gleichen Vorteile, die bereits im Zusammenhang mit dem erfindungsgemäßen Messeinsatz und dessen Ausgestaltungen beschrieben worden sind.

Vorteilhafte Ausgestaltungen des erfindungsgemäßen Verfahrens ergeben sich aus den Merkmalen der von Anspruch 10 abhängigen Ansprüche.

Günstig ist eine Ausgestaltung, bei der der eingebettete Reflexionselementstrang in einem Bereich der vorherigen Kontaktfläche des in dem Randabschnitt stehengebliebenen Basisstrangteils mit dem entfernten Durchflussstrangteil freigelegt wird. Der frei gelegte Bereich bildet den Schallreflektor, wobei aufgrund der Freilegung des Reflexionselements ein besonders gutes und definiertes Schallreflexionsverhalten resultiert.

Gemäß einer weiteren günstigen Ausgestaltung wird das in dem Randabschnitt stehengebliebene Basisstrangteil, insbesondere in Richtung des entfernten Durchflussstrangteils, in eine abgewinkelte Position umgebogen. Dadurch lässt sich ein auf diesen abgewinkelten Basisstrangteil auftreffendes Schallsignal sehr einfach und zugleich sehr effizient in den die eigentliche Messtrecke bildenden Hohlraum des Durchflussteils einkoppeln und ein von dort auftreffendes Schallsignal zu einem Empfänger, z.B. einem empfangenden Schallwandler, umlenken.

Gemäß einer weiteren günstigen Ausgestaltung wird an dem in dem Randabschnitt stehengebliebenen Basisstrangteil ein Stützelement angebracht, um die abgewinkelte Position zu fixieren. Dadurch wird erreicht, dass der insbesondere im Randabschnitt vorgesehene Schallreflektor dauerhaft in der während der Fertigung eingestellten kalibrierten Position bleibt.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines Durchflussmessers mit einem Messeinsatz in Längsschnittdarstellung,
- Fig. 2: den Messeinsatz des Durchflussmessers gemäß Fig. 1 in einer perspektivischen Darstellung,
- Fig. 3: ein weiteres Ausführungsbeispiel eines für einen Durchflussmesser bestimmten Messeinsatzes in einer perspektivischen Darstellung, und
- Fig. 4 - 6: die Messeinsätze gemäß Fig. 2 und 3 in verschiedenen Stadien während ihrer Herstellung.

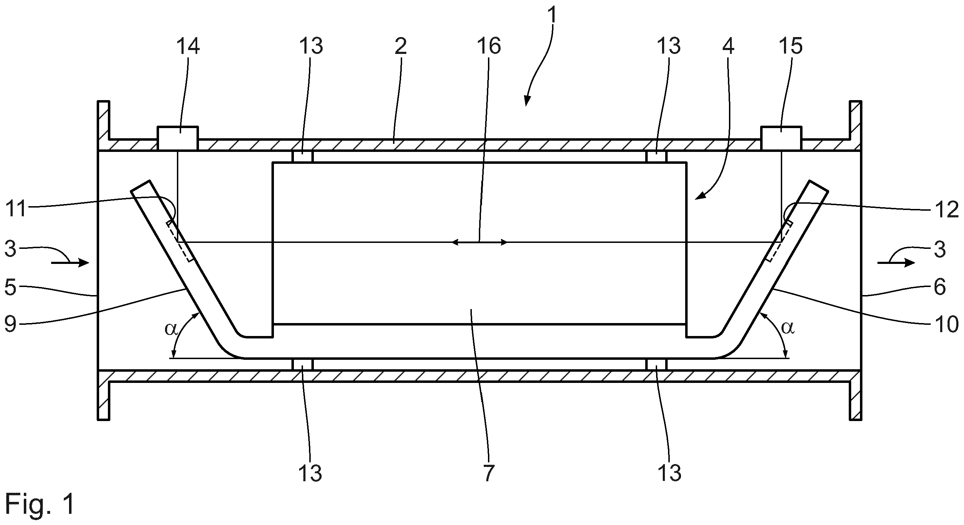

Einander entsprechende Teile sind in den Fig. 1 bis 6 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 ist ein Ausführungsbeispiel eines Durchflussmessers 1 zur Erfassung der Durchflussmenge eines durch ein Gehäuse 2 strömenden Mediums dargestellt. Das Medium durchströmt während des Betriebs das Gehäuse 2 in der durch die Pfeile angedeuteten Durchflussrichtung 3. Das Gehäuse 2 ist bei dem gezeigten Ausführungsbeispiel als gesondertes Armaturengehäuse ausgebildet, das in ein von dem zu erfassenden Medium durchflossenes Rohrleistungssystem einzubauen ist. Grundsätzlich ist aber auch eine alternative Ausgestaltung möglich, bei der das Gehäuse kein gesondertes Bauteil ist, sondern als ein Rohrabschnitt des Rohrleistungssystems ausgebildet ist.

Der Durchflussmesser 1 ist ultraschallbasiert und beruht auf dem Laufzeitdifferenzprinzip. Das in Fig. 1 gezeigte Ausführungsbeispiel ist zur Erfassung der Durchflussmenge des Mediums ausgelegt. Dies ist allerdings nicht einschränkend zu verstehen. Der Durchflussmesser 1 kann nämlich grundsätzlich auch Bestandteil einer kombinierten Erfassungseinheit, beispielsweise zur Erfassung einer über das Rohrleistungssystem zugeführten Menge an Wärme- oder Kälteenergie sein. Dazu sind zwei in Fig. 1 nicht dargestellte zusätzliche Temperatursensoren zur Erfassung einer Temperaturdifferenz zwischen Vor- und Rücklauf vorgesehen. Ein so ausgebildeter Wärme- oder Kältezähler erfasst dann die über das in dem Rohrleistungssystem angelieferte und verbrauchte Wärme- oder Kälte-Energie. Im Folgenden wird ohne Einschränkung der Allgemeingültigkeit nur auf die Erfassung der Durchflussmenge des Mediums eingegangen.

Der Durchflussmesser 1 umfasst einen bei Bedarf auch austauschbaren Messeinsatz 4, der in das Gehäuse 2 eingesetzt. Das Einsetzen erfolgt insbesondere mittels Einschieben in das Gehäuse 2 durch die vordere Durchflussöffnung 5 in Durchflussrichtung 3 oder durch die hintere Durchflussöffnung 6 entgegen der Durchflussrichtung 3.

Der Messeinsatz 4 hat einen Hauptabschnitt 7, der die eigentliche Messstrecke 8 in Form eines während des Betriebs von dem zu erfassenden Medium durchflossenen zylindrischen Hohlraums umfasst. Außerdem hat der Messeinsatz 4 einen in Durchflussrichtung 3 gesehen eingangsseitigen Randabschnitt 9 und einen in Durchflussrichtung 3 gesehen ausgangsseitigen Randabschnitt 10. Im Randabschnitt 9 ist ein Schallreflektor 11 und im Randabschnitt 10 ist ein Schallreflektor 12 vorgesehen. Die beiden Randabschnitte 9 und 10 sind jeweils einstückig an den Hauptabschnitt 7 angeformt, der eingangsseitige Randabschnitt 9 an einer ersten axialen Stirnseite des Hauptabschnitts 7 und der ausgangsseitige Randabschnitt 10 an einer der ersten axialen Stirnseite in Durchflussrichtung 3 gegenüberliegenden zweiten axialen Stirnseite des Hauptabschnitts 7. Mit "axial" ist hier eine Richtung in Durchflussrichtung 3 oder parallel zur Durchflussrichtung 3 bezeichnet. Der Messeinsatz 4 erstreckt sich in einer Längsrichtung, die gleich der oder parallel zu der Durchflussrichtung 3 ist.

Der Messeinsatz 4 ist vorzugsweise in Bezug auf eine Mittenquerschnittsebene spiegelsymmetrisch aufgebaut. Er hat bezüglich der Durchflussrichtung 3 insbesondere keine Vorzugsorientierung und ist vorteilhafterweise auch mit umgekehrter Orientierung, also mit der vorderen Durchflussöffnung 5 zugewandtem und dann die Eingangsseite bildendem Randabschnitt 10 und mit der hinteren Durchflussöffnung 6 zugewandtem und dann die Ausgangsseite bildendem Randabschnitt 9, in das Gehäuse 2 einsetzbar. Der Messeinsatz 4 ist deshalb sehr montagefreundlich. Insbesondere kann es aufgrund des symmetrischen Aufbaus beim Einsetzen des Messeinsatzes 4 in das Gehäuse 2 zu keinen Fehlern wegen etwaiger Missachtung der Orientierung kommen.

Weiterhin sind vorzugsweise Positioniermittel zur Sicherstellung einer korrekten Einbaulage des Messeinsatzes 4 im Gehäuse 2 vorgesehen. Diese Positioniermittel sind bei dem in Fig. 1 gezeigten Ausführungsbeispiel als Stege 13 ausgebildet. Es gibt aber auch alternative Ausführungsbeispiele, bei denen zusätzliche oder andere Mittel zur Positionierung oder Fixierung des Messeinsatzes 4 im Gehäuse 2 vorgesehen sind. So kann beispielsweise die Innenwand des Gehäuses 2 mit mindestens einem Gehäusewandvorsprung und die Außenwand des Messeinsatzes 4 mit mindestens einer zu dem Gehäusewandvorsprung korrespondierenden Messeinsatznut versehen sein, wobei der Gehäusewandvorsprung bei korrekter Positionierung des Messeinsatzes 4 innerhalb des Gehäuses 2 in die Messeinsatznut einrastet bzw. eingreift und so den Messeinsatz 4 in dieser Position innerhalb des Gehäuses 2 hält.

In eine Wand des Gehäuses 2 sind zwei Ultraschallwandler 14 und 15 eingesetzt. Die Ultraschallwandler 14 und 15 sind bei dem gezeigten Ausführungsbeispiel in die Wand des Gehäuses 2 eingeschraubt, wobei zugleich eine nicht näher gezeigte Abdichtung gegenüber einem Durchtritt des Mediums 3 durch die Schraubverbindung vorgesehen ist. Auch hierzu gibt es aber alternative Ausführungsbeispiele, bei denen die Ultraschallwandler 14 und 15 anders am Gehäuse 2 befestigt sind, beispielsweise mittels einer gesonderten Montage-/ Verschlussplatte, in die die Ultraschallwandler 14 und 15 eingesetzt sind und die eine weitere im Gehäuse 2 vorgesehene Öffnung abdeckt.

Der Durchflussmesser 1 arbeitet bidirektional. Die Ultraschallwandler 14 und 15 sind jeweils zum Senden und Empfangen eines Schallsignals 16 ausgelegt. Die Ultraschallwandler 14 und 15 sind so orientiert, dass das von ihnen erzeugte oder empfangene Schallsignal 16 im Wesentlichen senkrecht zur Durchflussrichtung 3 ausgesendet bzw. empfangen wird (siehe in Fig. 1 dargestellten Weg des Schallsignals 16).

In zur Durchflussrichtung 3 senkrechter (= radialer) Richtung ist benachbart zu jedem der beiden Ultraschallwandler 14 und 15 jeweils einer der beiden Schallreflektoren 11 und 12 angeordnet. Ein von einem der beiden Ultraschallwandler 14 oder 15 erzeugtes Schallsignal 16 wird an dem diesem Ultraschallwandler 14 oder 15 zugeordneten Schallreflektor 11 oder 12 umgelenkt, so dass es sich danach im Wesentlichen parallel zur Durchflussrichtung 3 ausbreitet und die Messstrecke 8 des Hauptabschnitts 7 durchläuft. Am gegenüberliegenden Ende der Messtrecke 8 wird das Schallsignal 16 am anderen der beiden Schallreflektoren 12 oder 11 erneut umgelenkt, um dann vom anderen der beiden Ultraschallwandler 15 oder 14 empfangen zu werden.

Wie bereits erwähnt, sind die Ultraschallwandler 14 und 15 jeweils sowohl als Schallsender als auch als Schallempfänger ausgebildet. Somit gibt es zwei entgegengesetzt orientierte Schallausbreitungsrichtungen, nämlich zum einen im Wesentlichen in Durchflussrichtung 3 und zum anderen im Wesentlichen entgegen der Durchflussrichtung 3. Insbesondere können beispielsweise impulsförmige Schallsignale 16 in Durchflussrichtung 3 und entgegen der Durchflussrichtung 3 in die Messstrecke 8 eingespeist werden. Aus der Laufzeitdifferenz dieser beiden entgegengesetzt orientierten Schallsignale 16 wird dann in einer nicht näher gezeigten Auswerteeinheit die Durchflussmenge des Mediums ermittelt.

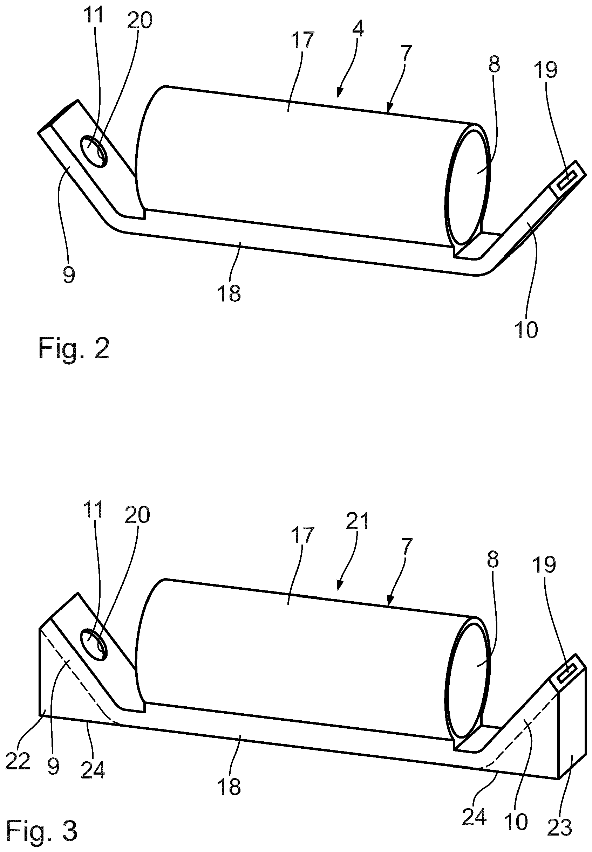

Im Folgenden werden auch unter Bezugnahme auf Fig. 2 weitere Einzelheiten des Messeinsatzes 4 näher erläutert.

Die verschiedenen Bestandteile des Messeinsatzes 4, also der die eigentliche Messtrecke 8 umfassende Hauptabschnitt 7 und die beiden die Schallreflektoren 11 und 12 umfassenden Randabschnitte 9 und 10, formen ein einziges gemeinsames Bauteil. Der Hauptabschnitt 7 hat seinerseits ein hohlzylindrisches Durchflussteil 17 mit der Messtrecke 8 und ein mit dem Durchflussteil 17 verbundenes Basisteil 18. Das Durchflussteil 17 sitzt auf dem Basisteil 18. Das Durchflussteil 17 und das Basisteil 18 erstrecken sich längs der Durchflussrichtung 3 und sind in dieser Richtung im Wesentlichen gleich lang. Das Basisteil 18 hat ein eingebettetes Reflexionselement 19, das sich innerhalb des Durchflussteils 17 ebenfalls in Durchflussrichtung 3 erstreckt.

Bei dem gezeigten Ausführungsbeispiel bestehen das Durchflussteil 17 und das Basisteil 18 abgesehen von dem darin eingebetteten Reflexionselement 19 aus dem gleichen thermoplastischen Kunststoff, insbesondere aus PPA. Das Reflexionselement 19 besteht demgegenüber aus einem anderen Material. Bei dem gezeigten Ausführungsbeispiel ist es als Stahlband ausgeführt, das zumindest innerhalb des Hauptabschnitts 7 senkrecht zur Durchflussrichtung 3 überall von dem thermoplastischen Kunststoff umgeben ist.

Während das Durchflussteil 17 an den axialen Grenzflächen, ab denen sich jeweils einer der beiden Randabschnitte 9 und 10 anschließt, endet, erstreckt sich das Basisteil 18 inklusive des eingebetteten Reflexionselements 19 über diese Grenzflächen hinaus bis in die beiden Randabschnitte 9 und 10.

Die Fortsetzung des Basisteils 18 ist in den Randabschnitten 9 und 10 jeweils abgewinkelt, so dass das Reflexionselement 19 in den Randabschnitten 9 und 10 zumindest bereichsweise jeweils unter einem von Null verschiedenen Randwinkel α (siehe Fig. 1) gegenüber der Durchflussrichtung 3 verläuft. Das Reflexionselement 19 hat in einem Übergangsbereich zwischen dem Hauptabschnitt 7 und dem jeweiligen Randabschnitt 9 oder 10 eine Biegestelle. In dem sich an die Biegestelle anschließenden abgewinkelten Bereich der Fortsetzung des Basisteils 18 ist jeweils der Schallreflektor 11 oder 12 angeordnet. Die Schallreflektoren 11 und 12 sind dabei jeweils als frei zugängliche Bereiche des Reflexionselements 19 ausgebildet. Die ansonsten vorgesehene Kunststoffumhüllung hat am Ort der Schallreflektoren 11 und 12 jeweils eine Öffnung 20, so dass das Reflexionselement 19 hier frei liegt.

In Fig. 3 wird ein weiteres Ausführungsbeispiel eines Messeinsatzes 21 gezeigt, der im Wesentlichen dem Messeinsatz 4 gemäß Fig. 1 und 2 entspricht. Der Hauptunterschied besteht darin, dass in den Randabschnitten 9 und 10 jeweils ein Stützkeil 22 und 23 vorzugsweise ebenfalls aus thermoplastischem Kunststoff, insbesondere aus PPA, vorgesehen ist, der an dem jeweiligen abgewinkelten Bereich der Fortsetzung des Basisteils 18 fest angebracht. Beispielsweise sind die Stützkeile 22 und 23 angespritzt. Die Stützkeile 22 und 23 halten die abgewinkelten Bereiche der Fortsetzungen des Basisteils 18 in ihren jeweiligen abgewinkelten Positionen, womit zugleich auch sichergestellt ist, dass die Schallreflektoren 11 und 12 während des Betriebs dauerhaft in ihrer während des Herstellungsprozesses eingestellten kalibrierten Position bleiben.

Gemäß einer nicht dargestellten alternativen Ausführungsform können an den Bodenflächen 24 der Stützkeile 22 und 23 zusätzlich zu den Stegen 13 (siehe Fig. 1) weitere Mittel zur Abstützung der Stützkeile 22 und 23 am Gehäuse 2 vorgesehen sein, wodurch die Stützfunktion der Stützkeile 22 und 23 weiter verbessert wird. Die Bodenflächen 24 der Stützkeile 22 und 23 sind dabei als die axialen Verlängerungen der Unterseite des Basisteils 18 des Hauptabschnitts 7 zu verstehen.

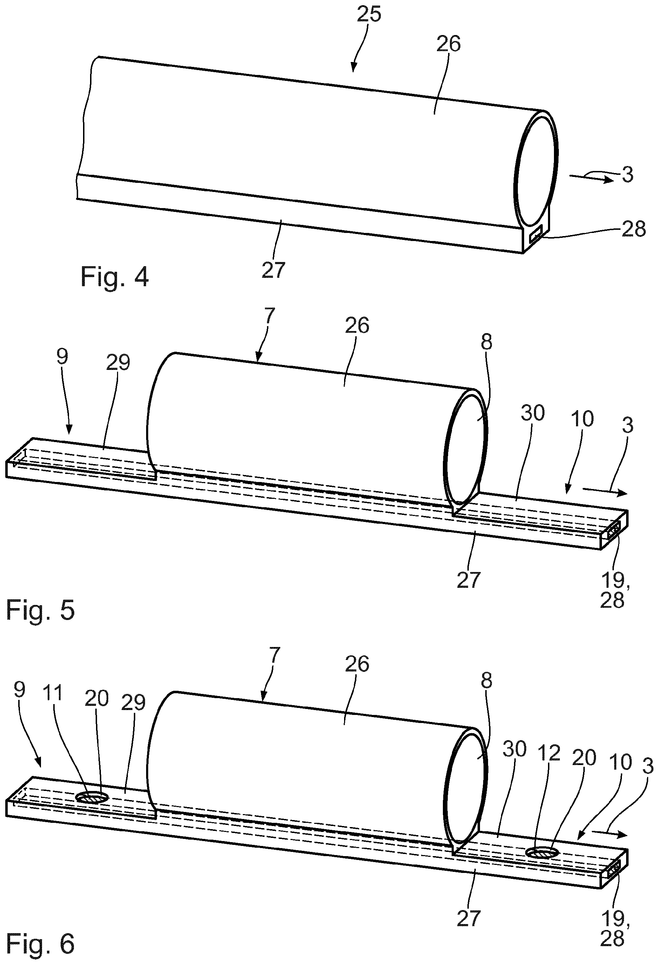

Im Folgenden wird unter Bezugnahme auf Fig. 4 bis 6 die Herstellung der Messeinsätze 4 und 21 beschrieben.

Ausgangspunkt ist ein in Fig. 4 perspektivisch gezeigtes Strangpressprofil 25, das ein hohles Durchflussstrangteil 26 und ein daran einstückig angeformtes Basisstrangteil 27 aufweist. In das Basisstrangteil 27 ist ein Reflexionselementstrang 28 in Form eines Stahlbandes eingebettet. Der Reflexionselementstrang 28 ist unmittelbar während der Strangpress- bzw. Extrusionsherstellung des Strangpressprofils 25 mit in das Basisstrangteil 27 integriert worden. Abgesehen von dem eingebetteten Stahlband besteht das Strangpressprofil 25 aus thermoplastischem Kunststoff, insbesondere aus PPA. Von diesem Strangpressprofil 25 wird ein Abschnitt mit vorgegebener Länge abgeschnitten. Dieser Abschnitt stellt einen Messeinsatzrohling dar.

An beiden axialen Randabschnitten 9 und 10 wird von dem Messeinsatzrohling ein Abschnitt des Durchflussstrangteils 26 entfernt. Der stehengebliebene Teil des Durchflussstrangteils 26 bildet dann zusammen mit dem angeformten Teil des Basisstrangteils 27 bereits den Hauptabschnitt 7 des Messeinsatzes 4 oder 21. Diese Zwischenstufe mit dem in Längsrichtung (= Durchflussrichtung 3 des Messeinsatzes 4 oder 21) verlaufenden und quer zur Längsrichtung noch durchgängig eingebetteten Reflexionselementstrang 28 bzw. Reflexionselement 19 ist in der perspektivischen Abbildung gemäß Fig. 5 gezeigt.

Anschließend wird an den durch das Entfernen des Durchflussstrangteils 26 in den Randabschnitten 9 und 10 entstandenen und das Basisstrangteil 27 begrenzenden Schnittflächen 29 und 30 bereichsweise das den Reflexionselementstrang 28 bzw. das Reflexionselement 19 umgebende Kunststoffmaterial entfernt, wodurch die Öffnungen 20 für die Schallreflektoren 11 und 12 gebildet werden. Diese Zwischenstufe ist in der perspektivischen Abbildung gemäß Fig. 6 gezeigt.

Danach werden die beiden durch das Entfernen des Durchflussstrangteils 26 in den Randabschnitten 9 und 10 entstandenen freien Abschnitte des Basisstrangteils 27 nach oben in Richtung des entfernten Durchflussstrangteils 26 umgebogen. Diese Biegung in den Randabschnitten 9 und 10 erfolgt insbesondere sehr präzise. Bei Bedarf kann auch eine Korrektur der Biegung vorgenommen werden, damit die Schallreflektoren 11 und 12 sich nach Abschluss des Biegevorgangs in einer definierten und kalibrierten Position befinden. Für den Messeinsatz 4 ist damit die Herstellung abgeschlossen. Er liegt dann in der in Fig. 2 abgebildeten einsatzbereiten Form vor.

Bei dem Messeinsatz 21 findet noch ein zusätzlicher Herstellungsschritt statt. Es werden noch die Stützkeile 22 und 23 an die Unterseiten der in den Randabschnitten 9 und 10 umgebogenen (oder abgewinkelten) Abschnitte des Basisstrangteils 27 angespritzt. Dann liegt auch der Messeinsatz 21 in seiner in Fig. 3 abgebildeten einsatzbereiten Form vor.

Aufgrund der möglichen Verwendung von Strangpress- oder Extrusionsprofilen und der nur geringfügigen Folgebearbeitung lassen sich die Messeinsätze 4 und 21 sehr einfach und kostengünstig herstellen. Sie bieten insofern gegenüber bisher bekannten Messeinsätzen von Durchflussmessern erhebliche Kostenvorteile.

## Patentansprüche

1. Messeinsatz für einen Durchflussmesser (1) zur schallbasierten Erfassung einer Durchflussmenge eines flüssigen oder gasförmigen Mediums umfassend
a) einen Hauptabschnitt (7) mit einem hohlen Durchflussteil (17) und einem damit einstückig verbundenen Basisteil (18), wobei
- das Durchflussteil (17) und das Basisteil (18) sich über eine gemeinsame Hauptabschnittslänge in eine Längsrichtung (3) erstrecken, wobei die Längsrichtung (3) gleich einer Durchflussrichtung des den Messeinsatz während des Betriebs durchströmenden Mediums ist,
- das Durchflussteil (17) auf dem Basisteil (18) sitzt,
- das Basisteil (18) ein sich in Längsrichtung (3) über die Hauptabschnittslänge erstreckendes Reflexionselement (19) aus Metall oder aus Keramik umfasst, wobei das Reflexionselement (19) im Hauptabschnitt (7) senkrecht zur Längsrichtung (3) überall umhüllt ist, nämlich in ein anderes Material, beispielsweise in ein Kunststoffmaterial, eingebettet ist,
b) mindestens einen Randabschnitt (9), der auf einer ersten axialen Stirnseite des Hauptabschnitts (7) einstückig mit dem Hauptabschnitt (7) verbunden ist, wobei
- sich das Reflexionselement (19) ausgehend vom Hauptabschnitt (7) bis in den Randabschnitt (9) erstreckt, und
- das Reflexionselement (19) im Randabschnitt (9) einen Schallreflektor (11) für ein Schallsignal (16) bildet.

2. Messeinsatz nach Anspruch 1, **dadurch gekennzeichnet, dass** das Reflexionselement (19) im Randabschnitt (9) zumindest bereichsweise frei zugänglich ist und in einem frei zugänglichen Bereich (20) den Schallreflektor (11) bildet.

3. Messeinsatz nach Anspruch 1 oder 2, **dadurch gekennzeichnet, dass** das Reflexionselement (19) im Randabschnitt (9) unter einer gegenüber der Längsrichtung (3) abgewinkelten Randrichtung verläuft.

4. Messeinsatz nach Anspruch 3, **dadurch gekennzeichnet, dass** ein Stützelement (22) vorhanden ist, der das Reflexionselement (19) im Randabschnitt (9) in seiner abgewinkelten Position mit dem Verlauf in der Randrichtung hält.

5. Messeinsatz nach Anspruch 4, **dadurch gekennzeichnet, dass** das Stützelement (22) fest mit dem Reflexionselement (19) verbunden ist, insbesondere an einer sich in den Randabschnitt (9) erstreckenden Verlängerung des Basisteils (18).

6. Messeinsatz nach einem der vorhergehenden Ansprüche, **dadurch gekennzeichnet, dass** das Durchflussteil (17) und das Basisteil (18) abgesehen von dem Reflexionselement (19) aus oder mit einem Kunststoffmaterial hergestellt sind.

7. Messeinsatz nach einem der vorhergehenden Ansprüche, **dadurch gekennzeichnet, dass** ein weiterer Randabschnitt (10) vorhanden ist, der auf einer zweiten axialen Stirnseite des Hauptabschnitts (7) einstückig an den Hauptabschnitt (7) angeformt ist, wobei sich das Reflexionselement (19) ausgehend vom Hauptabschnitt (7) bis in den weiteren Randabschnitt (10) erstreckt, und das Reflexionselement (19) im weiteren Randabschnitt einen weiteren Schallreflektor (12) für ein Schallsignal (16) bildet.

8. Messeinsatz nach einem der vorhergehenden Ansprüche, **dadurch gekennzeichnet, dass** das Durchflussteil (17) die Form eines Hohlzylinders hat.

9. Messeinsatz nach einem der vorhergehenden Ansprüche, **dadurch gekennzeichnet, dass** zumindest der Hauptabschnitt (7) als ein Strangpressprofil mit in das Basisteil (18) eingelagertem Reflexionselement (19) ausgestaltet ist.

10. Verfahren zur Herstellung eines Messeinsatzes (4; 21) nach einem der vorhergehenden Ansprüche, **dadurch gekennzeichnet, dass**
a) ein Strangpressprofil (25) mit einem Durchflussstrangteil (26) und einem damit verbundenen Basisstrangteil (27) hergestellt wird, wobei während der Herstellung des Strangpressprofils (25) ein Reflexionselementstrang (28) in das Basisstrangteil (27) mit eingebettet wird,
b) von dem Strangpressprofil (25) ein Messeinsatzrohling abgeschnitten wird, und
c) an mindestens einem axialen Randabschnitt (9) des Messeinsatzrohlings das Durchflussstrangteil (26) entfernt wird.

11. Verfahren nach Anspruch 10, **dadurch gekennzeichnet, dass** der eingebettete Reflexionselementstrang (28) in einem Bereich (20) der vorherigen Kontaktfläche (29) des in dem Randabschnitt (9) stehengebliebenen Basisstrangteils (27) mit dem entfernten Durchflussstrangteil (26) freigelegt wird.

12. Verfahren nach Anspruch 10 oder 11, **dadurch gekennzeichnet, dass** das in dem Randabschnitt (9) stehengebliebene Basisstrangteil (27) in eine abgewinkelte Position umgebogen wird.

13. Verfahren nach Anspruche 12, **dadurch gekennzeichnet, dass** an dem in dem Randabschnitt (9) stehengebliebenen Basisstrangteil (27) ein Stützelement (22) angebracht wird, um die abgewinkelte Position zu fixieren.

## Claims

1. Measuring insert for a flow meter (1) for the sound-based detection of a flow rate of a liquid or gaseous medium, the measuring insert comprising
a) a main portion (7) with a hollow flow part (17) and a base part (18) connected therewith in such a way as to form one piece, wherein
- the flow part (17) and the base part (18) extend along a common main portion length in a longitudinal direction (3), wherein the longitudinal direction (3) is equal to a flow direction of the medium flowing through the measuring insert during operation,
- the flow part (17) rests on the base part (18),
- the base part (18) comprises a reflection element (19) of metal or ceramics extending along the main portion length in the longitudinal direction (3), wherein the reflection element (19) is fully enclosed in the main portion (7) in a direction perpendicular to the longitudinal direction (3), namely it is embedded into another material, for example into a plastic material,
b) at least one edge portion (9) that is connected, on a first axial front end of the main portion (7), to the main portion (7) in such a way as to form one piece, wherein
- the reflection element (19), proceeding from the main portion (7), extends up into the edge portion (9), and
- the reflection element (19) forms, in the edge portion (9), a sound reflector (11) for a sound signal (16).

2. Measuring insert according to claim 1, **characterised in that** the reflection element (19) is at least partly accessible in the edge portion (9) and forms the sound reflector (11) in a partly accessible region (20).

3. Measuring insert according to claim 1 or 2, **characterised in that** in the edge portion (9), the reflection element (19) extends in an edge direction that is angled with respect to the longitudinal direction (3).

4. Measuring insert according to claim 3, **characterised in that** a support element (22) is provided that holds the reflection element (19) in its angled position with respect to the extent in the edge direction.

5. Measuring insert according to claim 4, **characterised in that** the support element (22) is rigidly connected to the reflection element (19), in particular on an extension of the base part (18), said extension running into the edge portion (9).

6. Measuring insert according to any one of the preceding claims, **characterised in that** the flow part (17) and the base part (18), except for the reflection element (19), are made of or with a plastic material.

7. Measuring insert according to any one of the preceding claims, **characterised in that** an additional edge portion (10) is provided that is formed in one piece with the main portion (7) on a second axial front end of the main portion (7), wherein the reflection element (19), proceeding from the main portion (7), extends up into the additional edge portion (10), and the reflection element (19) forms, in the additional edge portion, an additional sound reflector (12) for a sound signal (16).

8. Measuring insert according to any one of the preceding claims, **characterised in that** the flow part (17) has the shape of a hollow cylinder.

9. Measuring insert according to any one of the preceding claims, **characterised in that** at least the main portion (7) is configured as an extrusion-moulded profile comprising the reflection element (19) embedded into the base part (18).

10. Method for the production of a measuring insert (4; 21) according to any one of the preceding claims, **characterised in that**
a) an extrusion-moulded profile (25) comprising a flow strand part (26) and a base strand part (27) connected therewith is produced, wherein during the production of the extrusion-moulded profile (25), a reflection element strand (28) is embedded into the base strand part (27) as well,
b) a measuring insert blank is cut off the extrusion-moulded profile (25), and
c) the flow strand part (26) is removed from at least one axial edge portion (9) of the measuring insert blank.

11. Method according to claim 10, **characterised in that** the embedded reflection element strand (28) is exposed in a region (20) of the previous contact surface (29) between the remaining base strand part (27) in the edge portion (9) and the removed flow strand part (26).

12. Method according to claim 10 or 11, **characterised in that** the remaining base strand part (27) in the edge portion (9) is bent into an angled position.

13. Method according to claim 12, **characterised in that** a support element (22) is fitted to the remaining base strand part (27) in the edge portion (9) to secure the angled position.

## Revendications

1. Élément de mesure d'un débitmètre (1) pour l'enregistrement basé sur le son d'une quantité de débit d'un milieu liquide ou gazeux, comprenant
a) un segment principal (7) avec une pièce de débit creuse (17) et une pièce de base (18) reliée en un seul bloc, segment dans lequel
- la pièce de débit (17) et la pièce de base (18) s'étendent sur une longueur de segment principal commune dans le sens de la longueur (3), le sens de la longueur (3) étant le même qu'un sens de débit du milieu traversant l'élément de mesure en cours de fonctionnement,
- la pièce de débit (17) se trouve sur la pièce de base (18),
- la pièce de base (18) comprend un élément de réflexion (19) en métal ou en céramique s'étendant sur la longueur du segment principal dans le sens de la longueur (3), l'élément de réflexion (19) dans le segment principal (7) étant intégralement enveloppé perpendiculairement au sens de la longueur (3), c'est-à-dire est incorporé dans un autre matériau, par exemple dans un matériau en plastique,
b) au moins un segment de bord (9), relié en un seul bloc au segment principal (7) sur une première face avant axiale du segment principal (7), segment dans lequel
- l'élément de réflexion (19) sortant du segment principal (7) s'étend jusque dans le segment de bord (9) ; et
- l'élément de réflexion (19) forme, dans le segment de bord (9), un réflecteur de bruit (11) pour un signal de bruit (16).

2. Élément de mesure selon la revendication 1, **caractérisé en ce que** l'élément de réflexion (19) dans le segment de bord (9) est librement accessible au moins par zone et forme, dans une zone librement accessible (20) le réflecteur de bruit (11).

3. Élément de mesure selon la revendication 1 ou 2, **caractérisé en ce que** l'élément de réflexion (19) dans le segment de bord (9) s'étend dans un sens périphérique angulaire opposé au sens de la longueur (3).

4. Élément de mesure selon la revendication 3, **caractérisé en ce qu'**il existe un élément d'appui (22) qui maintient l'élément de réflexion (19) dans le segment de bord (9) dans sa position angulaire avec l'extension dans le sens périphérique.

5. Élément de mesure selon la revendication 4, **caractérisé en ce que** l'élément d'appui (22) est solidement relié à l'élément de réflexion (19), en particulier à un allongement de la pièce de base (18) s'étendent dans le segment de bord (9).

6. Élément de mesure selon l'une quelconque des revendications précédentes, **caractérisé en ce que** la pièce de débit (17) et la pièce de base (18), à l'exception de l'élément de réflexion (19), sont fabriquées à partir de ou avec un matériau en plastique.

7. Élément de mesure selon l'une quelconque des revendications précédentes, **caractérisé en ce qu'**il existe un autre segment de bord (10), installé en un seul bloc sur le segment principal (7) sur une deuxième face avant axiale du segment principal (7), segment dans lequel l'élément de réflexion (19) sortant du segment principal (7) s'étend jusque dans l'autre segment de bord (10) et l'élément de réflexion (19) forme, dans l'autre segment de bord, un autre réflecteur de bruit (12) pour un signal de bruit (16).

8. Élément de mesure selon l'une quelconque des revendications précédentes, **caractérisé en ce que** la pièce de débit (17) a la forme d'un cylindre creux.

9. Élément de mesure selon l'une quelconque des revendications précédentes, **caractérisé en ce qu'**au moins le segment principal (7) est, en qualité de profilé d'extrusion, équipé de l'élément de réflexion (19) inséré dans la pièce de base (18).

10. Procédé de fabrication d'un élément de mesure (4 ; 21), selon l'une quelconque des revendications précédentes, **caractérisé en ce que**
a) un profilé d'extrusion (25) est composé d'un élément de brin de débit (26) et d'un élément de brin de base (27) qui y est relié, lors de la fabrication du profilé d'extrusion (25), un brin de l'élément de réflexion (28) étant inséré dans l'élément de brin de base (27),
b) une ébauche de l'élément de mesure est découpée du profilé d'extrusion (25), et
c) l'élément de brin de débit (26) est retiré au moins sur un segment de bord (9) axial de l'ébauche de l'élément de mesure.

11. Procédé selon la revendication 10, **caractérisé en ce que** le brin de l'élément de réflexion (28) inséré est retiré, dans une zone (20) de la surface de contact (29) précédente de l'élément de brin de base (27) resté dans le segment de bord (9), avec l'élément de brin de débit (26) retiré.

12. Procédé selon la revendication 10 ou 11, **caractérisé en ce que** l'élément de brin de base (27) resté dans le segment de bord (9) est plié dans une position angulaire.

13. Procédé selon la revendication 12, **caractérisé en ce qu'**un élément d'appui (22) est placé sur l'élément de brin de base (27) resté dans le segment de bord (9) pour fixer la position angulaire.
